# EUROPEAN PATENT APPLICATION

(11) **EP 4 084 119 A1**
(43) Date of publication of application: **02.11.2022**
(21) Application number: 20906465.8
(22) Date of filing: 23.12.2020
(51) Int. Cl.: H01M 4/13, H01M 4/62, H01M 4/66

(54) **ELECTRODE AND BATTERY**

(30) Priority: 27.12.2019 JP 2019239696
(71) Applicant: Panasonic Intellectual Property Management Co., Ltd., Osaka-shi, Osaka 540-6207 (JP)
(72) Inventor: NAGAO, Kenji, Osaka-shi, Osaka 540-6207 (JP); SUGIMOTO, Yuta, Osaka-shi, Osaka 540-6207 (JP); OSHIMA, Tatsuya, Osaka-shi, Osaka 540-6207 (JP); MIYAZAKI, Akinobu, Osaka-shi, Osaka 540-6207 (JP)
(74) Representative: Eisenführ Speiser
(86) International application number: PCT/JP2020/048307
(87) International publication number: WO 2021/132406

(57) **Abstract**

An electrode 1000 of the present disclosure includes an electrode mixture layer 102 and an electrode current collector layer 101. The electrode current collector layer 101 is in contact with the electrode mixture layer 102. The electrode mixture layer 102 includes a solid electrolyte material 104 and an active material 103. The solid electrolyte material 104 includes Li, M, and X. M is at least one selected from the group consisting of metal elements other than Li and metalloid elements. X is at least one selected from the group consisting of F, Cl, Br, and I. The electrode current collector layer 101 has a surface material in contact with the electrode mixture layer 102, and an iron content in the surface material is 50 mass% or less.

## Description

### TECHNICAL FIELD

The present disclosure relates to an electrode and a battery.

### BACKGROUND ART

Patent Literature 1 discloses a positive electrode including: a halide solid electrolyte; a positive electrode active material; and a positive electrode current collector, as well as a battery. As the positive electrode current collector, an aluminum powder is used.

### CITATION LIST

### Patent Literature

Patent Literature 1: WO 2019/146217

### SUMMARY OF INVENTION

### Technical Problem

The present disclosure provides an electrode having an improved stability.

### Solution to Problem

An electrode according to one aspect of the present disclosure is an electrode including:
an electrode mixture layer; and
an electrode current collector layer, wherein
the electrode current collector layer is in contact with the electrode mixture layer,
the electrode mixture layer includes a solid electrolyte material and an active material,
the solid electrolyte material includes Li, M, and X,
the M is at least one selected from the group consisting of metal elements other than Li and metalloid elements,
the X is at least one selected from the group consisting of F, Cl, Br, and I, and
the electrode current collector layer has a surface material in contact with the electrode mixture layer, and an iron content in the surface material is 50 mass% or less.

Advantageous Effects of Invention

The present disclosure provides an electrode having an improved stability.

### BRIEF DESCRIPTION OF DRAWINGS

FIG. 1 shows a cross-sectional view of an electrode 1000 according to Embodiment 1.
FIG. 2 shows a cross-sectional view of a battery 2000 according to Embodiment 2.

### DESCRIPTION OF EMBODIMENTS

An electrode according to a first aspect of the present disclosure is an electrode including:
an electrode mixture layer; and
an electrode current collector layer, wherein
the electrode current collector layer is in contact with the electrode mixture layer,
the electrode mixture layer includes a solid electrolyte material and an active material,
the solid electrolyte material includes Li, M, and X,
the M is at least one selected from the group consisting of metal elements other than Li and metalloid elements,
the X is at least one selected from the group consisting of F, Cl, Br, and I, and
the electrode current collector layer has a surface material in contact with the electrode mixture layer, and an iron content in the surface material is 50 mass% or less.

The electrode according to the first aspect can improve the stability.

In a second aspect of the present disclosure, for example, in the electrode according to the first aspect, the iron content in the surface material may be 1.5 mass% or less.

The electrode according to the second aspect can further improve the stability.

In a third aspect of the present disclosure, for example, in the electrode according to the first or second aspect, the solid electrolyte material may be represented by the following composition formula (1)

Li_{α}M_{β}X_{γ} ... Formula (1),

where α, β, and γ are each a value greater than 0.

According to the electrode according to the third aspect, the ionic conductivity of the solid electrolyte material improves, and thus the ionic conductivity of the electrode can improve. Accordingly, when used in a battery, the electrode according to the third aspect can improve the charge and discharge characteristics of the battery.

In a fourth aspect of the present disclosure, for example, in the electrode according to any one of the first to third aspects, the M may include yttrium.

When used in a battery, the electrode according to the fourth aspect can further improve the charge and discharge characteristics of the battery.

In a fifth aspect of the present disclosure, for example, in the electrode according to any one of the first to fourth aspects, the electrode current collector layer may include aluminum as a main component.

In a sixth aspect of the present disclosure, for example, in the electrode according to the fifth aspect, the electrode current collector layer may further include an element other than aluminum.

In a seventh aspect of the present disclosure, for example, in the electrode according to any one of the first to sixth aspects, the electrode current collector layer may include an aluminum alloy.

Aluminum and aluminum alloys are lightweight metals having a high electrical conductivity. Accordingly, the electrodes according to the fifth to seventh aspects not only can improve the stability but also can improve, when used in a battery, the weight energy density of the battery.

In an eighth aspect of the present disclosure, for example, in the electrode according to any one of the first to seventh aspects, the active material may be a positive electrode active material.

The electrode according to the eighth aspect can improve the stability of a positive electrode.

In a ninth aspect of the present disclosure, for example, in the electrode according to any one of the first to seventh aspects, the active material may be a negative electrode active material.

The electrode according to the ninth aspect can improve the stability of a negative electrode.

A battery according to a tenth aspect of the present disclosure is a battery including:
a positive electrode;
a negative electrode; and
an electrolyte layer disposed between the positive electrode and the negative electrode, wherein
at least one selected from the group consisting of the positive electrode and the negative electrode is the electrode according to one of the first to seventh aspects.

The battery according to the tenth aspect can improve the stability of the electrode.

Hereinafter, embodiments of the present disclosure will be described with reference to the drawings.

### (Embodiment 1)

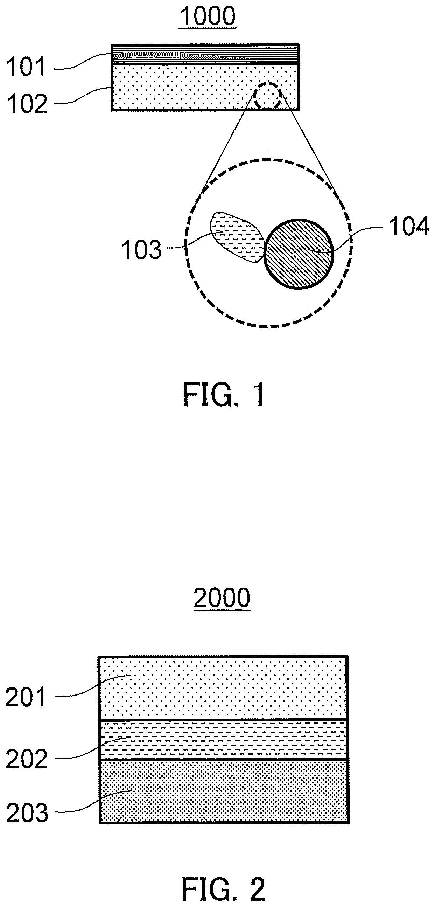

FIG. 1 is a cross-sectional view of an electrode 1000 according to Embodiment 1. The electrode 1000 according to Embodiment 1 includes an electrode current collector layer 101 and an electrode mixture layer 102. The electrode current collector layer 101 is in contact with the electrode mixture layer 102. The electrode mixture layer 102 includes an active material 103 and a solid electrolyte material 104. The solid electrolyte material 104 includes Li, M, and X, where M is at least one selected from the group consisting of metal elements other than Li and metalloid elements, and X is at least one selected from the group consisting of F, Cl, Br, and I. The electrode current collector layer 101 has a surface material in contact with the electrode mixture layer 102, and the iron content in the surface material is 50 mass% or less.

With the structure above, the electrode 1000 according to Embodiment 1 suppresses a decrease in ionic conductivity of the solid electrolyte material 104 due to charge and discharge of a battery (e.g., an all-solid-state secondary battery), improving the stability.

In the electrode current collector layer 101, the surface material in contact with the electrode mixture layer 102 refers to a material of a contact portion of a surface of the electrode current collector layer 101, in contact with the electrode mixture layer 102, from the surface to a depth of 50 nm. The iron content in the surface material is the proportion of the mass of iron contained in the surface material with respect to the total mass of the surface material. The iron content in the surface material can be determined by, for example, scanning electron microscope-energy dispersive X-ray spectroscopy (SEM-EDX). In the case where measurement by SEM-EDX is difficult, X-ray photoelectron spectroscopy (XPS) may be used for determining the iron content in the surface material, for example.

In the present disclosure, the term "metalloid elements" are B, Si, Ge, As, Sb, and Te.

Furthermore, in the present disclosure, the term "metal elements" are:
(i) all the elements included in Groups 1 to 12 of the periodic table, except for hydrogen; and
(ii) all the elements included in Groups 13 to 16 of the periodic table, except for B, Si, Ge, As, Sb, Te, C, N, P, O, S, and Se.

In other words, in the present disclosure, the terms "metalloid elements" and "metal elements" are a group of elements that can become cations when forming an inorganic compound with a halogen element.

The electrode 1000 according to Embodiment 1 will be described in detail below.

The solid electrolyte material 104 may be a halide solid electrolyte material. Note that, in the present disclosure, the term "halide solid electrolyte material" means a solid electrolyte material containing a halogen element and being free of sulfur. Furthermore, in the present disclosure, a sulfur-free solid electrolyte material means a solid electrolyte material represented by a composition formula including no sulfur element. Accordingly, a solid electrolyte material containing an extremely minute amount of a sulfur component, for example, 0.1 mass% or less of sulfur, is included in sulfur-free solid electrolyte materials. The halide solid electrolyte material may further contain oxygen as an anion other than a halogen element. The following describes an example where the solid electrolyte material 104 is a halide solid electrolyte material containing Li, M, and X. Thus, the solid electrolyte material 104 is referred to also as a halide solid electrolyte material 104.

### [Electrode Mixture Layer]

The electrode mixture layer 102 according to Embodiment 1 includes the halide solid electrolyte material 104 and the active material 103. The following describes in detail the halide solid electrolyte material 104, the active material 103, and the electrode mixture layer 102.

### <Halide Solid Electrolyte Material>

As described above, the halide solid electrolyte material 104 is a material containing Li, M, and X. The element M and the element X are as described above. With the structure above, the ionic conductivity of the halide solid electrolyte material 104 further improves, and thus the ionic conductivity of the electrode according to Embodiment 1 can further improve. Accordingly, when used in a battery, the electrode according to Embodiment 1 can improve the charge and discharge efficiency of the battery. Furthermore, when used in a battery, the electrode according to Embodiment 1 can improve the thermal stability of the battery. Moreover, since the halide solid electrolyte material 104 is free of sulfur, the electrode according to Embodiment 1 can suppress generation of hydrogen sulfide gas.

For example, the halide solid electrolyte material 104 may be a material represented by the following composition formula (1).

Li_{α}M_{β}X_{γ} ... Formula (1)

Here, in the composition formula (1) above, α, β, and γ are each a value greater than 0, and γ can be, for example, 4 or 6.

With the structure above, the ionic conductivity of the halide solid electrolyte material 104 improves, and thus the ionic conductivity of the electrode according to Embodiment 1 can improve. Accordingly, when used in a battery, the electrode 1000 according to Embodiment 1 can further improve the charge and discharge efficiency of the battery.

In the composition formula (1) above, the element M may include Y (= yttrium). In other words, the halide solid electrolyte material 104 may contain Y as a metal element.

The halide solid electrolyte material 104 containing Y may be represented, for example, by the following composition formula (2).

LiₐMe_{b}Y_{c}X₆ ... Formula (2)

Here, a, b, and c may satisfy a + mb + 3c = 6 and c > 0. The element Me is at least one selected from the group consisting of metal elements other than Li and Y and metalloid elements. The symbol m represents the valence of the element Me. Additionally, in the case where the element Me includes a plurality of types of elements, mb represents the total of values each obtained by multiplying the composition ratio of each of the elements by the valence of the element. Assume a case where, for example, Me includes an element Me1 and an element Me2, the composition ratio of the element Me1 is represented by b₁, the valence of the element Me1 is represented by m₁, the composition ratio of the element Me2 is represented by b₂, and the valence of the element Me2 is represented by m₂. In this case, mb = m₁b₁ + m₂b₂ holds. In the composition formula (2) above, the element X is at least one selected from the group consisting of F, Cl, Br, and I.

The element Me may be, for example, at least one selected from the group consisting of Mg, Ca, Sr, Ba, Zn, Sc, Al, Ga, Bi, Zr, Hf, Ti, Sn, Ta, Gd, and Nb.

The following materials, for example, can be used as the halide solid electrolyte material 104. With the following materials, the ionic conductivity of the halide solid electrolyte material 104 further improves, and thus the ionic conductivity of the electrode 1000 according to Embodiment 1 can further improve. Accordingly, when used in a battery, the electrode 1000 according to Embodiment 1 can further improve the charge and discharge efficiency of the battery.

The halide solid electrolyte material 104 may be a material represented by the following composition formula (A1).

Li_{6-3d}Y_{d}X₆ ... Formula (A1)

Here, in the composition formula (A1), the element X is at least one selected from the group consisting of Cl, Br, and I. Furthermore, in the composition formula (A1), d satisfies 0 < d < 2.

The halide solid electrolyte material 104 may be a material represented by the following composition formula (A2).

Li₃YX₆ ... Formula (A2)

Here, in the composition formula (A2), the element X is at least one selected from the group consisting of Cl, Br, and I.

The halide solid electrolyte material 104 may be a material represented by the following composition formula (A3).

Li_{3-3δ}Y_{1+δ}Cl₆ ... Formula (A3)

Here, in the composition formula (A3), δ satisfies 0 <δ ≤ 0.15.

The halide solid electrolyte material 104 may be a material represented by the following composition formula (A4).

Li_{3-3δ}Y_{1+δ}Br₆ ... Formula (A4)

Here, in the composition formula (A4), δ satisfies 0 <δ ≤ 0.25.

The halide solid electrolyte material 104 may be a material represented by the following composition formula (A5).

Li_{3-3δ+a}Y_{1+δ-a}MeₐCl_{6-x-y}BrₓI_{y} ... Formula (A5)

Here, in the composition formula (A5), the element Me is at least one selected from the group consisting of Mg, Ca, Sr, Ba, and Zn.

Furthermore, the composition formula (A5) above satisfies:
-1 < δ <2;
0 < a < 3;
0 < (3 - 35 + a);
0<(1 + δ - a);
0 ≤ x ≤ 6;
0 ≤ y ≤ 6; and
(x + y) ≤ 6.

The halide solid electrolyte material 104 may be a material represented by the following composition formula (A6).

Li_{3-3δ}Y_{1+δ-a}MeₐCl_{6-x-y}BrₓI_{y} ... Formula (A6)

Here, in the composition formula (A6) above, the element Me is at least one selected from the group consisting of Al, Sc, Ga, and Bi.

Furthermore, the composition formula (A6) above satisfies:
-1 < δ < 1;
0 < a < 2;
0<(1 + δ - a);
0 ≤ x ≤ 6;
0 ≤ y ≤ 6; and
(x + y) ≤ 6.

The halide solid electrolyte material 104 may be a material represented by the following composition formula (A7).

Li_{3-3δ-a}Y_{1+δ-a}MeₐCl_{6-x-y}BrₓI_{y} ... Formula (A7)

Here, in the composition formula (A7) above, the element Me is at least one selected from the group consisting of Zr, Hf, and Ti.

Furthermore, the composition formula (A7) above satisfies:
-1 <δ< 1;
0<a< 1.5;
0 < (3 - 35 - a);
0<(1 + δ - a);
0 ≤ x ≤ 6;
0 ≤ y ≤ 6; and
(x + y) ≤ 6.

The halide solid electrolyte material 104 may be a material represented by the following composition formula (A8).

Li_{3-3δ-2a}Y_{1+δ-a}MeₐCl_{6-x-y}BrₓI_{y} ... Formula (A8)

Here, in the composition formula (A8) above, the element Me is at least one selected from the group consisting of Ta and Nb.

Furthermore, the composition formula (A8) above satisfies:
-1 < δ <1;
0 < a < 1.2;
0 < (3 - 35 - 2a);
0 < (1 + δ - a);
0 ≤ x ≤ 6;
0 ≤ y ≤ 6; and
(x + y) ≤ 6.

More specific examples which can be used as the halide solid electrolyte material 104 include Li₃YX₆, Li₂MgX₄, Li₂FeX₄, Li(Al, Ga, In)X₄, and Li₃(Al, Ga, In)X₆. Here, in these materials, the element X is at least one selected from the group consisting of F, Cl, Br, and I. Note that, in the present disclosure, when an element in a formula is expressed such as "(Al, Ga, In)", this expression indicates at least one element selected form the group of elements in parentheses. In other words, the expression "(Al, Ga, In)" is synonymous with the expression "at least one selected from the group consisting of Al, Ga, and In". The same applies to other elements.

Furthermore, the shape of the halide solid electrolyte material 104 is not particularly limited, and may be, for example, acicular, spherical, or ellipsoidal. The shape of the halide solid electrolyte material 104 may be, for example, particulate.

Next, a method of manufacturing the halide solid electrolyte material 104 will be described. Here, a method of manufacturing the halide solid electrolyte material represented by the composition formula (1) above will be exemplified.

First, depending on an intended composition, a plurality of types of binary halide raw material powders are prepared, for example. Binary halides refer to compounds consisting of two types of elements including a halogen element. For example, to produce Li₃YCl₆, a raw material powder LiCl and a raw material powder YCl₃ are prepared at a molar ratio of 3: 1. At this time, the element types of "M" and "X" in the composition formula (1) can be determined by selecting the types of the raw material powders. Furthermore, the values of "α", "β", and "γ" in the composition formula (1) can be adjusted by adjusting the types of the raw material powders, the blending ratio of the raw material powders, and the synthesis process.

The raw material powders are mixed and pulverized, and then reacted together by a mechanochemical milling method. Alternatively, the raw material powders may be mixed and pulverized, and then sintered in a vacuum or in an inert atmosphere. The firing condition may be, for example, firing in a range of 100°C to 550°C for 1 hour or more. By these methods, a halide solid electrolyte material represented by the composition formula (1) above can be obtained.

Additionally, the structure of the crystal phase (i.e., crystal structure) of the halide solid electrolyte material can be adjusted or determined in accordance with the reaction method and reaction conditions of the raw material powders.

### <Active Material>

The active material 103 according to Embodiment 1 is a positive electrode active material or a negative electrode active material.

The positive electrode active material is, for example, a material having properties of occluding and releasing metal ions (e.g., lithium ions). Examples of the positive electrode active material include a lithium-containing transition metal oxide, a transition metal fluoride, a polyanion material, a fluorinated polyanion material, a transition metal sulfide, a transition metal oxysulfide, and a transition metal oxynitride. Examples of the lithium-containing transition metal oxide include Li(Ni, Co, Al)O₂, Li(Ni, Co, Mn)O₂, and LiCoO₂. In the case where a lithium-containing transition metal oxide is, for example, used as the positive electrode active material, it is possible to reduce the manufacturing costs of the electrode 1000 and the battery, and to increase the average discharge voltage of the battery.

Furthermore, to increase the energy density of the battery, lithium nickel cobalt manganese oxide may be used as the positive electrode active material. For example, the positive electrode active material may be Li(Ni, Co, Mn)O₂.

The negative electrode active material is, for example, a material having properties of occluding and releasing metal ions (e.g., lithium ions). Examples of the negative electrode active material include a metal material, a carbon material, an oxide, a nitride, a tin compound, and a silicon compound. The metal material may be an elemental metal or an alloy. Examples of the metal material include lithium metal and a lithium alloy. Examples of the carbon material include a natural graphite, a coke, a semi-graphitized carbon, a carbon fiber, a spherical carbon, an artificial graphite, and an amorphous carbon. By using silicon (Si), tin (Sn), a silicon compound, a tin compound, or the like, the capacity density of the battery can be improved.

### <Electrode Mixture Layer>

As described above, the electrode mixture layer 102 includes the halide solid electrolyte material 104. With this structure, the ionic conductivity inside the electrode mixture layer 102 increases, thereby allowing an operation at a high power.

In the case where the shape of the halide solid electrolyte material 104 included in the electrode mixture layer 102 is particulate (e.g., spherical), the median diameter of the halide solid electrolyte material 104 may be 100 µm or less. In the case where the median diameter of the halide solid electrolyte material 104 is 100 µm or less, the active material 103 and the halide solid electrolyte material 104 can be favorably dispersed in the electrode mixture layer 102. This improves the charge and discharge characteristics of the battery.

The median diameter of the halide solid electrolyte material 104 included in the electrode mixture layer 102 may be smaller than that of the active material 103. This allows the halide solid electrolyte material 104 and the active material 103 to be favorably dispersed.

The median diameter of the active material 103 may be 0.1 µm or more and 100 µm or less. In the case where the median diameter of the active material is 0.1 µm or more, the active material 103 and the halide solid electrolyte material 104 can be favorably dispersed in the electrode mixture layer 102. This improves the charge and discharge characteristics of a battery using the electrode 1000. In the case where the median diameter of the active material 103 is 100 µm or less, the diffusion rate of lithium in the active material improves. This allows a battery using the electrode 1000 to operate at a high power.

Here, the median diameter refers to a particle diameter at a cumulative volume of 50% in the volumetric particle size distribution. The volumetric particle size distribution is determined by a laser diffraction scattering method. The same applies to other materials below.

When the volume fractions of the active material 103 and the halide solid electrolyte material 104 included in the electrode mixture layer 102 are defined as "v1 : 100 - v1 ", 30 ≤ v1 ≤ 95 may be satisfied. Here, v1 represents, when the total volume of the active material 103 and the solid electrolyte material 104 included in the electrode mixture layer 102 is 100, the volume fraction of the active material 103. In the case where 30 ≤ v1 is satisfied, a sufficient energy density of the battery is easily achieved. In the case where v1 ≤ 95 is satisfied, an operation of the battery at a high power is further easily achieved.

The thickness of the electrode mixture layer 102 may be 10 µm or more and 500 µm or less. In the case where the thickness of the electrode mixture layer 102 is 10 µm or more, a sufficient energy density of the battery is easily achieved. In the case where the thickness of the electrode mixture layer 102 is 500 µm or less, an operation of the battery at a high power is further easily achieved.

The active material 103 may be coated with a coating material to reduce the interface resistance between the active material 103 and the halide solid electrolyte material 104. As the coating material, a material having a low electronic conductivity can be used. As the coating material, an oxide material, an oxide solid electrolyte material, etc. can be used.

Examples of the oxide material which can be used as the coating material include SiO₂, Al₂O₃, TiO₂, B₂O₃, Nb₂O₅, WO₃, and ZrO₂.

Examples of the oxide solid electrolyte material which can be used as the coating material include a Li-Nb-O compound such as LiNbO₃, a Li-B-O compound such as LiBO₂ and Li₃BO₃, a Li-Al-O compound such as LiAlO₂, a Li-Si-O compound such as Li₄SiO₄, a Li-S-O compound such as Li₂SO₄, a Li-Ti-O compound such as Li₄Ti₅O₁₂, a Li-Zr-O compound such as Li₂ZrO₃, a Li-Mo-O compound such as Li₂MoO₃, a Li-V-O compound such as LiV₂O₅, and a Li-W-O compound such as Li₂WO₄. Oxide solid electrolyte materials are high in ionic conductivity and in high-potential stability. Accordingly, using an oxide solid electrolyte material as the coating material can further improve the charge and discharge efficiency of the battery.

### [Electrode Current Collector Layer]

Patent Literature 1 discloses a positive electrode including: a halide solid electrolyte; an active material; and a positive electrode current collector, as well as a battery. In the battery disclosed in Patent Literature 1, an aluminum powder is used as the positive electrode current collector. In other words, the positive electrode disclosed in Patent Literature 1 includes the halide solid electrolyte, the active material, and the aluminum current collector. According to Patent Literature 1, the positive electrode disclosed therein can improve the charge and discharge efficiency of the battery owing to this structure. However, Patent Literature 1 fails to reveal the details of the influence of an electrode including a halide solid electrolyte, an active material, and a current collector on the stability of the electrode.

The present inventors have studied a battery including a halide solid electrolyte material, an active material, and a current collector. As a result, the present inventors have found that in the case where charge and discharge, that is, an oxidation-reduction reaction is repeated with the halide solid electrolyte material and iron being in contact with each other, corrosion of iron occurs inside the halide solid electrolyte material. Then, the present inventors have found that this causes a problem that the ionic conductivity of the halide solid electrolyte material decreases and the resistance of the halide solid electrolyte material increases, resulting in a decrease in stability of the electrode. This problem is considered to be caused by a reaction between the halide solid electrolyte material and iron. More specifically, a reaction at a binding site having high ion-binding properties such as M-X of halide solid electrolyte materials is considered to be the reason. Furthermore, such a phenomenon is considered to be less likely to occur at a binding site having high covalent characteristics, such as P-S bond of sulfide solid electrolyte materials and M-O bond of oxide solid electrolyte materials. In other words, such a problem above is considered to be a problem specific to halide solid electrolyte materials.

The present inventors have further studied based on the above findings. As a result, it has been found that, by setting the iron content in a surface material of an electrode current collector layer in contact with an electrode mixture layer including a halide solid electrolyte material to 50 mass% or less, a decrease in ionic conductivity of the halide solid electrolyte material can be suppressed even with a structure in which the halide solid electrolyte material is combined with a current collector. As described above, in the electrode 1000 according to Embodiment 1, in the electrode current collector layer 101, the iron content in the surface material in contact with the electrode mixture layer 102 including the halide solid electrolyte material 104 is 50 mass% or less. Accordingly, the electrode 1000 according to Embodiment 1 can suppress a decrease in ionic conductivity of the halide solid electrolyte material 104 due to the charge and discharge of the battery, and thus can improve the stability of the electrode 1000.

In the electrode 1000 according to Embodiment 1, in the electrode current collector layer 101, the iron content in the surface material in contact with the electrode mixture layer 102 including the halide solid electrolyte material 104 may be less than 7.9 mass%. When expressed in atomic percentage (i.e., at.%), the iron content in the above surface material may be less than 4 at.%.

In the electrode 1000 according to Embodiment 1, in the electrode current collector layer 101, the iron content in the surface material in contact with the electrode mixture layer 102 including the halide solid electrolyte material 104 may be 1.5 mass% or less.

Hereinafter, the term "surface material, of the electrode current collector layer 101, in contact with the electrode mixture layer 102" is also abbreviated as "surface material".

In the electrode 1000 according to Embodiment 1, the iron content in the surface material at least in contact with the electrode mixture layer 102, of the surface of the electrode current collector layer 101, may be 0 mass%. In other words, the surface material may contain no iron. Owing to the surface material containing no iron, a decrease in ionic conductivity of the halide solid electrolyte material 104 can be further suppressed. Accordingly, owing to the surface material containing no iron, the electrode 1000 according to Embodiment 1 can further improve the stability of the electrode 1000 while maintaining a high ionic conductivity of the halide solid electrolyte material 104.

In the case where the surface material contains iron, the iron content in the surface material may be 0.12 mass% or more.

In the electrode 1000 according to Embodiment 1, the surface material may contain iron as long as the iron content in the surface material at least in contact with the electrode mixture layer 102, of the surface of the electrode current collector layer 101, is 50 mass% or less. In the case where the iron content is 50 mass% or less, the electrode 1000 according to Embodiment 1 can achieve both improvement in strength of the electrode current collector layer 101 and suppression of a decrease in ionic conductivity of the halide solid electrolyte material 104, and thus can further improve the stability of the electrode 1000.

In the electrode 1000 according to Embodiment 1, the surface material may contain iron as long as the iron content in the surface material at least in contact with the electrode mixture layer 102, of the surface of the electrode current collector layer 101, is 50 mass% or less. In the case where the iron content is 50 mass% or less, the electrode 1000 according to Embodiment 1 can achieve both improvement in strength of the electrode current collector layer 101 and suppression of a decrease in ionic conductivity of the halide solid electrolyte material 104, and thus can further improve the stability of the electrode 1000.

Examples of the material used as the surface material according to Embodiment 1 include carbon (C), silicon (Si), bismuth (Bi), antimony (Sb), lead (Pb), tin (Sn), iron (Fe), chromium (Cr), zinc (Zn), tantalum (Ta), nickel (Ni), cobalt (Co), cadmium (Cd), manganese (Mn), zirconium (Zr), titanium (Ti), aluminum (Al), beryllium (Be), thorium (Th), magnesium (Mg), sodium (Na), calcium (Ca), strontium (Sr), barium (Ba), potassium (K), rubidium (Rb), cesium (Cs), lithium (Li), vanadium (V), tungsten (W), copper (Cu), silver (Ag), gold (Au), and platinum (Pt). The surface material according to Embodiment 1 preferably contains at least one selected from the group consisting of carbon (C), iron (Fe), nickel (Ni), and aluminum (Al). The surface material may contain an alloy of the above metals. The surface material may contain aluminum as a main component. Here, the phrase "the surface material contains aluminum as a main component" means that the aluminum content in the surface material is 50 mass% or more. The surface material may further contain an element other than aluminum. The surface material may contain an aluminum alloy. Additionally, in the case where the surface material consists of aluminum, that is, in the case where the aluminum content in the surface material is 100 mass%, a native oxide film on the surface might increase the contact resistance against the electrode mixture layer 102. Accordingly, it is desirable that the surface material should contain an element other than aluminum. Furthermore, the aluminum content in the surface material may be 90 mass% or less or 70 mass% or less.

The surface material may contain at least one selected from the group consisting of carbon (C), silicon (Si), bismuth (Bi), antimony (Sb), lead (Pb), tin (Sn), iron (Fe), chromium (Cr), zinc (Zn), tantalum (Ta), nickel (Ni), cobalt (Co), cadmium (Cd), manganese (Mn), zirconium (Zr), titanium (Ti), beryllium (Be), thorium (Th), magnesium (Mg), sodium (Na), calcium (Ca), strontium (Sr), barium (Ba), potassium (K), rubidium (Rb), cesium (Cs), lithium (Li), vanadium (V), tungsten (W), copper (Cu), silver (Ag), gold (Au), and platinum (Pt).

In the case where the surface material contains copper, the copper content may be 4.5 mass% or less. In the case where charge and discharge, that is, an oxidation-reduction reaction, is repeated with the halide solid electrolyte material and copper being in contact with each other, elution, diffusion, and precipitation of copper into the halide solid electrolyte material sometimes occur. Then, this causes a decrease in ionic conductivity of the halide solid electrolyte material and an inhibition of the reaction interface between the active material and the halide solid electrolyte material, and thus the cycle characteristics of the battery might decrease. However, in the case where the copper content is 4.5 mass% or less, a decrease in ionic conductivity of the halide solid electrolyte material can be suppressed even with a structure in which the halide solid electrolyte material is combined with a current collector. Consequently, the cycle characteristics of the battery can be improved.

To the extent that the problem above can be solved, the surface material may contain an element or a component other than the materials above in consideration of contaminations, etc. For example, on a portion of the surface of the electrode current collector layer 101, an inevitable oxide film, etc. may be formed. In other words, the surface material may contain an inevitable oxide, etc.

In the electrode 1000, the electrode current collector layer 101 only needs to be, in at least its surface in contact with the electrode mixture layer 102, formed of the surface material. In the electrode current collector layer 101, only the surface may be formed of the surface material, or the entirety of the surface and the interior may be formed of the same material as the surface material.

For example, by coating the surface of the material forming the interior of the electrode current collector layer 101 with the surface material by plating, sputtering, or the like, it is possible to produce the electrode current collector layer 101 whose surface in contact with the electrode mixture layer 102 is formed of the surface material. Furthermore, by applying a solution of the surface material or a dispersion of the surface material onto the surface of the material forming the interior of the electrode current collector layer 101 with a gravure coater, a die coater, or the like, it is possible to produce the electrode current collector layer 101 whose surface in contact with the electrode mixture layer 102 is formed of the surface material.

The thickness of the electrode current collector layer 101 may be 0.1 µm or more and 1 mm or less. In the case where the thickness of the electrode current collector layer 101 is 0.1 µm or more, the strength of the electrode current collector layer 101 improves, thereby suppressing damages to the electrode current collector layer 101. Furthermore, in the case where the thickness of the electrode current collector layer 101 is 1 mm or less, the electrical resistance of the electrode 1000 decreases, thereby facilitating an operation of the battery at a high power. In other words, an appropriate adjustment of the thickness of the electrode current collector layer 101 allows to achieve stable manufacture of the battery and to operate the battery at a high power.

A metal or a metal alloy may be used as the material of the electrode current collector layer 101 according to Embodiment 1. Examples of the metal include aluminum, iron, and copper. Examples of the metal alloy include an aluminum alloy and stainless steel (SUS).

The electrode current collector layer 101 may contain aluminum as a main component. Here, the phrase "the electrode current collector layer 101 contains aluminum as a main component" means that the aluminum content in the electrode current collector layer 101 is 50 mass% or more. Aluminum is a lightweight metal having a high electrical conductivity. Accordingly, the electrode 1000 which includes the electrode current collector layer 101 containing aluminum as a main component not only has an excellent stability but also can improve, when used in a battery, the weight energy density of the battery. The electrode current collector layer 101 containing aluminum as a main component may further contain an element other than aluminum. Additionally, in the case where the electrode current collector layer 101 consists of aluminum, that is, in the case where the aluminum content in the electrode current collector layer 101 is 100%, a native oxide film on the surface might increase the contact resistance against the electrode mixture layer 102. Accordingly, it is desirable that the electrode current collector layer 101 should contain an element other than aluminum. Furthermore, the aluminum content in the electrode current collector layer 101 may be 90 mass% or less or 70 mass% or less.

The electrode current collector layer 101 may contain an aluminum alloy. Aluminum alloys are lightweight and high in strength. Accordingly, the electrode 1000 which includes the electrode current collector layer 101 containing an aluminum alloy can achieve a battery having both a high weight energy density and a high durability. The aluminum alloy is not particularly limited. Examples thereof include an Al-Cu alloy, an Al-Mn alloy, an Al-Mn-Cu alloy, and an Al-Fe-Cu alloy.

As the material of the electrode current collector layer 101 according to Embodiment 1, an Al-Mn-Cu alloy may be used. The Al-Mn-Cu alloy has a high strength and also has excellent formability and corrosion resistance. Accordingly, the electrode 1000 which includes the electrode current collector layer 101 containing the Al-Mn-Cu alloy can further improve the stability of the electrode 1000.

As the electrode current collector layer 101 according to Embodiment 1, the above aluminum alloy having a surface on which a carbon (C) material is provided as a surface material may be used. Examples of the carbon material include graphites such as natural graphite and artificial graphite, carbon blacks such as acetylene black and ketjen black, and conductive fibers such as a carbon fiber. Alternatively, the carbon material may be a coke, a semi-graphitized carbon, a spherical carbon, an amorphous carbon, or the like. By providing the carbon material on the aluminum alloy as the surface material, it is possible to seek improvement in corrosion resistance of the electrode current collector layer 101.

A method of manufacturing the electrode 1000 according to Embodiment 1 is, for example, a method in which a dispersion including the halide solid electrolyte material 104 and the active material 103, which form the electrode mixture layer 102, is coated onto the electrode current collector layer 101. As the dispersion, a slurry may be used in which the halide solid electrolyte material 104 and the active material 103 are dispersed in a solvent. As the solvent, a solvent that does not react with halide solid electrolytes, for example, an aromatic solvent such as toluene can be used. Examples of the coating method include a die coating method, a gravure coating method, a doctor blade method, a bar coating method, a spray coating method, and an electrostatic coating method.

### (Embodiment 2)

Embodiment 2 will be described below. The description overlapping that in Embodiment 1 above will be omitted as appropriate.

FIG. 2 is a cross-sectional view of a battery 2000 according to Embodiment 2.

The battery 2000 according to Embodiment 2 includes a positive electrode 201, a negative electrode 203, and an electrolyte layer 202.

At least one selected from the group consisting of the positive electrode 201 and the negative electrode 203 is the electrode according to Embodiment 1 described above (e.g., the electrode 1000). In other words, at least one selected from the group consisting of the positive electrode 201 and the negative electrode 203 includes the electrode mixture layer 102 and the electrode current collector layer 101, which are described in Embodiment 1.

The electrolyte layer 202 is disposed between the positive electrode 201 and the negative electrode 203.

With the structure above, the battery 2000 of Embodiment 2 can improve the stability of the electrode.

Additionally, in the battery 2000 according to Embodiment 2, the positive electrode 201 may be the electrode 1000 according to Embodiment 1 described above. In this case, the positive electrode 201 includes the electrode mixture layer 102 and the electrode current collector layer 101, which are described in Embodiment 1.

With the structure above, the stability of the electrode of the battery 2000 can be further improved.

The electrolyte layer 202 is a layer including an electrolyte material. The electrolyte material is, for example, a solid electrolyte material. In other words, the electrolyte layer 202 may be a solid electrolyte layer. Examples which can be used as the solid electrolyte material included in the electrolyte layer 202 include a sulfide solid electrolyte material, an oxide solid electrolyte material, a halide solid electrolyte material, a polymer solid electrolyte material, and a complex hydride solid electrolyte material. The solid electrolyte material may be, for example, a halide solid electrolyte material.

In the present disclosure, the term "oxide solid electrolyte material" refers to a solid electrolyte material containing oxygen. Here, the oxide solid electrolyte material may further contain, as an anion other than oxygen, an anion other than sulfur and halogen elements.

The "halide solid electrolyte material" is as described in Embodiment 1, and corresponds to the solid electrolyte material 104 included in the electrode mixture layer 102 according to Embodiment 1 described above.

Examples which can be used as the sulfide solid electrolyte material include Li₂S-P₂S₅, Li2S-SiS2, Li₂S-B₂S₃, Li2S-GeS2, Li_{3.25}Ge_{0.25}P_{0.75}S₄, and Li₁₀GeP₂S₁₂. Furthermore, LiX, Li₂O, MO_{q}, and/or LiₚMO_{q}, etc. may be added to these. Here, the element X in "LiX" is at least one selected from the group consisting of F, Cl, Br, and I. Moreover, the element M in "MO_{q}" and "LiₚMO_{q}" is at least one selected from the group consisting of P, Si, Ge, B, Al, Ga, In, Fe, and Zn. Additionally, p and q in "MO_{q}" and "LiₚMO_{q}" are each a natural number.

Examples which can be used as the oxide solid electrolyte material include: a NASICON solid electrolyte material typified by LiTi₂(PO₄)₃ and element-substituted substances thereof; a (LaLi)TiO₃-based perovskite solid electrolyte material; a LISICON-type solid electrolyte material typified by Li₁₄ZnGe₄O₁₆, Li₄SiO₄, and LiGeO₄ and element-substituted substances thereof; a garnet solid electrolyte material typified by Li₇La₃Zr₂O₁₂ and element-substituted substances thereof; Li₃PO₄ and N-substituted substances thereof; glass to which Li₂SO₄, Li₂CO₃, or the like has been added using a Li-B-O compound such as LiBO₂ or Li₃BO₃ as the base thereof; and glass ceramics.

Examples which can be used as the polymer solid electrolyte include a compound of a polymer compound and a lithium salt. The polymer compound may have an ethylene oxide structure. A polymer compound having an ethylene oxide structure can contain a large amount of lithium salt. This can further improve the ionic conductivity. Examples which can be used as the lithium salt include LiPF₆, LiBF₄, LiSbF₆, LiAsF₆, LiSO₃CF₃, LiN(SO₂F)₂, LiN(SO₂CF₃)₂, LiN(SO₂C₂F₅)₂, LiN(SO₂CF₃)(SO₂C₄F₉), and LiC(SO₂CF₃)₃. The lithium salts may be used alone, or two or more thereof may be used in combination.

Examples which can be used as the complex hydride solid electrolyte include LiBH4-Lil and LiBH₄-P₂S₅.

Additionally, the electrolyte layer 202 may include the solid electrolyte material as a main component. In other words, the electrolyte layer 202 may include, the solid electrolyte material, for example, at a mass proportion of 70% or more (70 mass% or more) with respect to the entire electrolyte layer 202.

With the structure above, the charge and discharge characteristics of the battery 2000 can be further improved.

Additionally, while including the solid electrolyte material as a main component, the electrolyte layer 202 may further include inevitable impurities, or a starting material used for synthesis of the solid electrolyte material, a by-product, a decomposition product, etc.

Furthermore, the electrolyte layer 202 may include the solid electrolyte material, for example, at a mass proportion of 100% (100 mass%) with respect to the entire electrolyte layer 202, except for inevitably incorporated impurities.

With the structure above, the charge and discharge characteristics of the battery 2000 can be further improved.

Additionally, the electrolyte layer 202 may include two or more of the materials listed as the solid electrolyte material. For example, the electrolyte layer 202 may include a halide solid electrolyte material and a sulfide solid electrolyte material.

The thickness of the electrolyte layer 202 may be 1 µm or more and 300 µm or less. In the case where the thickness of the electrolyte layer 202 is 1 µm or more, a possibility of a short-circuit between the positive electrode 201 and the negative electrode 203 is reduced. Furthermore, in the case where the thickness of the electrolyte layer 202 is 300 µm or less, an operation at a high power is easily achieved. In other words, an appropriate adjustment of the thickness of the electrolyte layer 202 allows to achieve a sufficient safety of the battery 2000 and to operate the battery 2000 at a high power.

The shape of the solid electrolyte material included in the battery 2000 is not limited. The shape of the solid electrolyte material may be, for example, acicular, spherical, or ellipsoidal. The shape of the solid electrolyte material may be, for example, particulate.

At least one of the positive electrode 201 and the negative electrode 203 may include an electrolyte material, and may include, for example, a solid electrolyte material. As the solid electrolyte material, a solid electrolyte material exemplified as a material forming the electrolyte layer 202 can be used. With the structure above, the ionic conductivity (e.g., lithium ionic conductivity) inside the positive electrode 201 or the negative electrode 203 increases, thereby allowing an operation at a high power.

Furthermore, the positive electrode 201 or the negative electrode 203 may include a sulfide solid electrolyte material as the solid electrolyte material and use the halide solid electrolyte material described above as a coating material coating the active material.

The positive electrode 201 includes, for example, as a positive electrode active material, a material having properties of occluding and releasing metal ions (e.g., lithium ions). As the positive electrode active material, the materials exemplified in Embodiment 1 described above may be used.

In the case where the shape of the solid electrolyte material included in the positive electrode 201 is particulate (e.g., spherical), the median diameter of the solid electrolyte material may be 100 µm or less. In the case where the median diameter of the solid electrolyte material is 100 µm or less, the positive electrode active material and the solid electrolyte material can be favorably dispersed in the positive electrode 201. This improves the charge and discharge characteristics of the battery 2000.

The median diameter of the solid electrolyte material included in the positive electrode 201 may be smaller than that of the positive electrode active material. This allows the solid electrolyte material and the positive electrode active material to be favorably dispersed.

The median diameter of the positive electrode active material may be 0.1 µm or more and 100 µm or less. In the case where the median diameter of the positive electrode active material is 0.1 µm or more, the positive electrode active material and the solid electrolyte material can be favorably dispersed in the positive electrode 201. This improves the charge and discharge characteristics of the battery 2000. In the case where the median diameter of the positive electrode active material is 100 µm or less, the diffusion rate of lithium in the positive electrode active material improves. This allows the battery 2000 to operate at a high power.

When the volume fractions of the positive electrode active material and the solid electrolyte material included in the positive electrode 201 are defined as "v2: 100 - v2", 30 ≤ v2 ≤ 95 may be satisfied. Here, v2 represents, when the total volume of the positive electrode active material and the solid electrolyte material included in the positive electrode 201 is 100, the volume fraction of the positive electrode active material. In the case where 30 ≤ v2 is satisfied, a sufficient energy density of the battery 2000 is easily achieved. In the case where v2 ≤ 95 is satisfied, an operation of the battery 2000 at a high power is further easily achieved.

The thickness of the positive electrode 201 may be 10 µm or more and 500 µm or less. In the case where the thickness of the positive electrode 201 is 10 µm or more, a sufficient energy density of the battery 2000 is easily achieved. In the case where the thickness of the positive electrode 201 is 500 µm or less, an operation of the battery 2000 at a high power is further easily achieved.

The negative electrode 203 includes, for example, as a negative electrode active material, a material having properties of occluding and releasing metal ions (e.g., lithium ions). As the negative electrode active material, the materials exemplified in Embodiment 1 described above may be used.

The median diameter of the negative electrode active material may be 0.1 µm or more and 100 µm or less. In the case where the median diameter of the negative electrode active material is 0.1 µm or more, the negative electrode active material and the solid electrolyte material can be favorably dispersed in the negative electrode 203. This improves the charge and discharge characteristics of the battery 2000. In the case where the median diameter of the negative electrode active material is 100 µm or less, the diffusion rate of lithium in the negative electrode active material improves. This allows the battery 2000 to operate at a high power.

The median diameter of the negative electrode active material may be larger than that of the solid electrolyte material. This allows the solid electrolyte material and the negative electrode active material to be favorably dispersed.

When the volume fractions of the negative electrode active material and the solid electrolyte material included in the negative electrode 203 are defined as "v3: 100 - v3", 30 ≤ v3 ≤ 95 may be satisfied. Here, v3 represents, when the total volume of the negative electrode active material and the solid electrolyte material included in the negative electrode 203 is 100, the volume fraction of the negative electrode active material. In the case where 30 ≤ v3 is satisfied, a sufficient energy density of the battery 2000 is easily achieved. In the case where v3 ≤ 95 is satisfied, an operation of the battery 2000 at a high power is further easily achieved.

The thickness of the negative electrode 203 may be 10 µm or more and 500 µm or less. In the case where the thickness of the negative electrode 203 is 10 µm or more, a sufficient energy density of the battery 2000 is easily achieved. In the case where the thickness of the negative electrode 203 is 500 µm or less, an operation of the battery 2000 at a high power is further easily achieved.

The positive electrode active material and the negative electrode active material each may be coated with a coating material to reduce the interface resistance between each of the active materials and the solid electrolyte material. As the coating material, a material having a low electronic conductivity can be used. As the coating material, an oxide material, an oxide solid electrolyte material, etc. can be used. As the coating material, the materials exemplified in Embodiment 1 described above may be used.

At least one selected from the group consisting of the positive electrode 201, the electrolyte layer 202, and the negative electrode 203 may contain a binder to improve the adhesion between the particles. Examples of the binder include polyvinylidene fluoride, polytetrafluoroethylene, polyethylene, polypropylene, aramid resin, polyamide, polyimide, polyamide-imide, polyacrylonitrile, polyacrylic acid, polyacrylic acid methyl ester, polyacrylic acid ethyl ester, polyacrylic acid hexyl ester, polymethacrylic acid, polymethacrylic acid methyl ester, polymethacrylic acid ethyl ester, polymethacrylic acid hexyl ester, polyvinyl acetate, polyvinylpyrrolidone, polyether, polycarbonate, polyethersulfone, polyetherketone, polyetheretherketone, polyphenylenesulfide, hexafluoropolypropylene, styrene-butadiene rubber, carboxymethylcellulose, and ethylcellulose. Furthermore, copolymers can be used which include, as monomers, two or more selected from the group consisting of tetrafluoroethylene, hexafluoroethylene, hexafluoropropylene, perfluoroalkyl vinyl ether, vinylidene fluoride, chlorotrifluoroethylene, ethylene, propylene, butadiene, styrene, pentafluoropropylene, fluoromethyl vinyl ether, acrylic acid ester, acrylic acid, and hexadiene. These may be used alone, or two or more thereof may be used in combination.

As the binder, an elastomer may be used because of being excellent in binding properties. Note that elastomers are polymers having elasticity. Furthermore, an elastomer used as the binder may be a thermoplastic elastomer or a thermosetting elastomer. The binder may include a thermoplastic elastomer. Examples of the thermoplastic elastomer include styrene-ethylene-butylene-styrene (SEBS), styrene-ethylene-propylene-styrene (SEPS), styrene-ethylene-ethylene-propylene-styrene (SEEPS), butylene rubber (BR), isoprene rubber (IR), chloroprene rubber (CR), acrylonitrile-butadiene rubber (NBR), styrene-butylene rubber (SBR), styrene-butadienestyrene (SBS), styrene-isoprene-styrene (SIS), hydrogenated isoprene rubber (HIR), hydrogenated butyl rubber (HIIR), hydrogenated nitrile rubber (HNBR), hydrogenated styrene-butylene rubber (HSBR), polyvinylidene fluoride (PVdF), and polytetrafluoroethylene (PTFE). Furthermore, two or more selected from these may be mixed and used. In the case where the binder includes a thermoplastic elastomer, high filling of the electrode 1000 can be achieved in thermocompression during battery manufacture.

To facilitate transfer of lithium ions and thereby improve the output characteristics of the battery 2000, at least one selected from the group consisting of the positive electrode 201, the electrolyte layer 202, and the negative electrode 203 may contain a nonaqueous electrolyte solution, a gel electrolyte, or an ionic liquid.

The nonaqueous electrolyte solution contains a nonaqueous solvent and a lithium salt dissolved in the nonaqueous solvent. Examples of the nonaqueous solvent which can be used include a cyclic carbonate solvent, a linear carbonate solvent, a cyclic ether solvent, a linear ether solvent, a cyclic ester solvent, a linear ester solvent, and a fluorinated solvent. Examples of the cyclic carbonate solvent include ethylene carbonate, propylene carbonate, and butylene carbonate. Examples of the linear carbonate solvent include dimethyl carbonate, ethyl methyl carbonate, and diethyl carbonate. Examples of the cyclic ether solvent include tetrahydrofuran, 1,4-dioxane, and 1,3-dioxolane. Examples of the linear ether solvent include 1,2-dimethoxyethane and 1,2-diethoxyethane. Examples of the cyclic ester solvent include γ-butyrolactone. Examples of the linear ester solvent include methyl acetate. Examples of the fluorinated solvent include fluoroethylene carbonate, methyl fluoropropionate, fluorobenzene, fluoroethyl methyl carbonate, and fluorodimethylene carbonate. As the nonaqueous solvent, one nonaqueous solvent selected from these may be used alone, or a mixture of two or more nonaqueous solvents selected from these may be used.

The nonaqueous electrolyte solution may contain at least one fluorinated solvent selected from the group consisting of fluoroethylene carbonate, methyl fluoropropionate, fluorobenzene, fluoroethyl methyl carbonate, and fluorodimethylene carbonate.

Examples of the lithium salt include LiPF₆, LiBF₄, LiSbF₆, LiAsF₆, LiSO₃CF₃, LiN(SO₂F)₂, LiN(SO₂CF₃)₂, LiN(SO₂C₂F₅)₂, LiN(SO₂CF₃)(SO₂C₄F₉), and LiC(SO₂CF₃)₃. As the lithium salt, one lithium salt selected from these may be used alone, or a mixture of two or more lithium salts selected from these may be used. The concentration of the lithium salt may be, for example, 0.5 mol/L or more and 2 mol/L or less.

As the gel electrolyte, a material obtained by impregnating a polymer material with a nonaqueous electrolyte solution can be used. Examples of the polymer material include polyethylene oxide, polyacrylonitrile, polyvinylidene fluoride, polymethyl methacrylate, and a polymer having an ethylene oxide bond.

Cations constituting the ionic liquid may be: aliphatic linear quaternary salts such as tetraalkylammoniums and tetraalkylphosphoniums; aliphatic cyclic ammoniums such as pyrrolidiniums, morpholiniums, imidazoliniums, tetrahydropyrimidiniums, piperaziniums, and piperidiniums; nitrogen-containing heterocyclic aromatic cations such as pyridiniums and imidazoliums, or the like. Anions constituting the ionic liquid may be PF₆⁻, BF₄⁻, SbF₆⁻, AsF₆⁻, SO₃CF₃⁻, N(SO₂F)₂⁻, N(SO₂CF₃)₂⁻, N(SO₂C₂F₅)₂⁻, N(SO₂CF₃)(SO₂C₄F₉)⁻, C(SO₂CF₃)₃⁻, or the like. The ionic liquid may contain a lithium salt.

At least one of the positive electrode 201 and the negative electrode 203 may contain a conductive additive to improve the electronic conductivity. Examples of the conductive additive include: graphites such as natural graphite and artificial graphite; carbon blacks such as acetylene black and ketjen black; conductive fibers such as a carbon fiber and a metal fiber; conductive powders such as a fluorinated carbon powder and an aluminum powder; conductive whiskers such as a zinc oxide whisker and a potassium titanate whisker; conductive metal oxides such as titanium oxide; and conductive polymers such as polyaniline, polypyrrole, and polythiophene. Using a carbon material as the conductive additive can seek cost reduction.

The shape of the battery is, for example, a coin type, a cylindrical type, a prismatic type, a sheet type, a button type, a flat type, or a stack type.

The battery 2000 according to Embodiment 2 may be manufactured, for example, by preparing each of a current collector material for a positive electrode, a material for forming a positive electrode, a material for forming an electrolyte layer, a material for forming a negative electrode, and a current collector material for a negative electrode, and producing by a known method a stack in which the positive electrode, the electrolyte layer, and the negative electrode are disposed in this order.

### Examples

Hereinafter, the details of the present disclosure will be described with reference to examples and a comparative example. Note that the electrode and the battery of the present disclosure are not limited to the following examples.

### <Example 1>

### [Production of Halide Solid Electrolyte Material]

In an argon glove box with a dew point of -60°C or less, YCl₃, LiCl, and LiBr were weighed as raw material powders at a molar ratio of YCl₃: LiCl: LiBr = 1: 1: 2. Then, these raw material powders were mixed, and the resulting mixture was subjected to a firing process at 520°C for 2 hours using an electric furnace. Thus, Li₃YBr₂Cl₄ (hereinafter referred to as "LYBC"), which is a halide solid electrolyte material, was obtained. P-chlorotoluene was added to the obtained LYBC, and the resulting mixture was pulverized using a wet pulverizing and dispersing device, and then dried. Thus, a LYBC fine powder (having a median diameter Dso = 0.4 µm) was obtained.

### [Production of Sulfide Solid Electrolyte Material]

In an argon glove box with a dew point of -60°C or less, Li₂S and P₂S₅ were weighed as raw material powders at a molar ratio of Li₂S: P₂S₅ = 75: 25. These raw material powders were pulverized for mixing in a mortar. The resulting mixture was then subjected to a milling process at 510 rpm for 10 hours using a planetary ball mill (Type P-7, manufactured by Fritsch GmbH). The resulting glassy solid electrolyte was heat-treated at 270°C in an inert atmosphere for 2 hours. In this way Li₂S-P₂S₅ (hereinafter referred to as "LPS"), which is a solid electrolyte material in the form of glass ceramics, was obtained.

### [Production of Evaluation Samples]

In an insulating outer cylinder, aluminum alloy A1085 punched out to have ϕ 9.2 mm, 100 mg of LYBC, and 100 mg of LPS were stacked in this order to obtain a stack. A pressure of 720 MPa was applied to this stack. Metallic lithium was placed on the LPS and a pressure of 40 MPa was further applied, and thus an evaluation sample was obtained. Aluminum alloy A1085 was used as an electrode current collector layer.

Next, stainless steel leads were attached to the top and the bottom of the evaluation sample.

Next, the inside of the insulating outer cylinder was blocked for sealing from the outside atmosphere with an insulating ferrule.

Finally, the evaluation sample was held from above and below with four bolts to apply a surface pressure of 150 MPa to the evaluation sample.

In this way the evaluation sample of Example 1 was produced. In the electrode included in the evaluation sample of Example 1, the iron content in a surface material of an electrode current collector layer in contact with a halide solid electrolyte material was 0.12 mass%.

### <Example 2>

In evaluation sample production, aluminum alloy A3003 (having an Fe content of 0.7 mass%) was used as an electrode current collector layer. The processes except for this were performed in a similar manner to the method of Example 1 described above to obtain an evaluation sample of Example 2. The iron content in a surface material of an electrode current collector layer in contact with a halide solid electrolyte material was 0.7 mass%.

### <Example 3>

In evaluation sample production, aluminum alloy A8021 (having an Fe content of 1.5 mass%) was used as an electrode current collector layer. The processes except for this were performed in a similar manner to the method of Example 1 described above to obtain an evaluation sample of Example 3. The iron content in a surface material of an electrode current collector layer in contact with a halide solid electrolyte material was 1.5 mass%.

### <Comparative Example 1>

In evaluation sample production, stainless steel SUS304 (having an Fe content of 70 mass%) was used as a current collector. The processes except for this were performed in a similar manner to the method of Example 1 described above to obtain an evaluation sample of Comparative Example 1. The iron content in a surface material of an electrode current collector layer in contact with a halide solid electrolyte material was 70 mass%.

### <Evaluation of Evaluation Samples>

### [Cyclic Voltammetry]

Cyclic voltammetry was performed under the following conditions using each of the evaluation samples of Examples 1 to 3 and Comparative Example 1.

The evaluation sample was placed in a thermostatic chamber at 25°C.

Potential scanning was performed on a potential range from 2.5 V v.s. Li/Li⁺ to 4.3 V v.s. Li/Li⁺ at a scanning rate of 2 mV/s.

For each of the above evaluation samples of Examples 1 to 3 and Comparative Example 1, the total current value in a range of 3 V v.s. Li/Li⁺ to 4.3 V v.s. Li/Li⁺ and the current amount at the peak top of oxidation in the cyclic voltammogram were obtained. The results are shown in Table 1.

### [X-ray Photoelectron Spectroscopy]

The above evaluation sample of Comparative Example 1 after the cyclic voltammetry measurement was taken out and washed with ethanol. Elemental analysis was performed by XPS on the surface of the electrode current collector layer in contact with the halide solid electrolyte material and its depth direction. The results are shown in Table 2.

**[Table 1]**

| | Material type of electrode current collector layer | Iron content in surface material of electrode current collector layer [mass%] | Total current value from 3 V v.s. Li/Li⁺ to 4.3 V v.s. Li/Li⁺ [mA] | Current amount at peak top [µA] |
|---|---|---|---|---|
| Example 1 | Aluminum alloy A1085 | 0.12 | 0.319 | 0.029 |
| Example 2 | Aluminum alloy A3003 | 0.7 | 0.212 | 0.014 |
| Example 3 | Aluminum alloy A8021 | 1.5 | 0.820 | 0.478 |
| Comparative Example 1 | Stainless steel SUS304 | 70 | 1.789 | 0.596 |

**[Table 2]**

| Atomic concentration (at.%) | | | |
|---|---|---|---|
| Depth (nm) | Fe | Cl | Br |
| 0 | 4 | 3 | 7 |
| 1 | 25 | 5 | 3 |
| 3 | 43 | 2 | < 1 |
| 5 | 63 | 2 | < 1 |
| 10 | 70 | 2 | < 1 |
| 20 | 73 | < 1 | < 1 |
| 30 | 77 | < 1 | < 1 |
| 50 | 79 | < 1 | < 1 |
| 70 | 78 | < 1 | < 1 |
| 100 | 76 | < 1 | < 1 |

### <Discussion>

From the comparison of the results of Examples 1 to 3 and the results of Comparative Example 1 shown in Table 1, it was ascertained that the evaluation samples, which used the current collector in which the iron content in the surface material of the electrode current collector layer in contact with the halide solid electrolyte material was 50 mass% or less, exhibit a low total current value from 3 V v.s. Li/Li⁺ to 4.3 V v.s. Li/Li⁺ and a low current amount at the peak top of oxidation in the cyclic voltammogram, and thus exhibit an improved stability of the electrode.

Furthermore, according to the surface analysis and the depth analysis by XPS on the electrode current collector layer formed of SUS304 of Comparative Example 1 shown in Table 2, Cl and Br contained in the halide solid electrolyte material were detected. From the results, it was ascertained that Fe contained in the electrode current collector layer was corroded and the electrode current collector layer deteriorated.

From the above, it was ascertained that using the electrode of the present disclosure improves the stability of the electrode. The electrode of the present disclosure is an electrode including:
an electrode mixture layer; and
an electrode current collector layer, wherein
the electrode current collector layer is in contact with the electrode mixture layer,
the electrode mixture layer includes a solid electrolyte material and an active material,
the solid electrolyte material includes Li, M, and X,
the M is at least one selected from the group consisting of metal elements other than Li and metalloid elements,
the X is at least one selected from the group consisting of F, Cl, Br, and I, and
the electrode current collector layer has a surface material in contact with the electrode mixture layer, and an iron content in the surface material is 50 mass% or less.

### INDUSTRIAL APPLICABILITY

The battery of the present disclosure can be utilized as, for example, an all-solid-state lithium ion secondary battery.

## Claims

1. An electrode comprising:
an electrode mixture layer; and
an electrode current collector layer, wherein
the electrode current collector layer is in contact with the electrode mixture layer,
the electrode mixture layer includes a solid electrolyte material and an active material,
the solid electrolyte material includes Li, M, and X,
the M is at least one selected from the group consisting of metal elements other than Li and metalloid elements,
the X is at least one selected from the group consisting of F, Cl, Br, and I, and
the electrode current collector layer has a surface material in contact with the electrode mixture layer, and an iron content in the surface material is 50 mass% or less.

2. The electrode according to claim 1, wherein
the iron content in the surface material is 1.5 mass% or less.

3. The electrode according to claim 1 or 2, wherein
the solid electrolyte material is represented by the following composition formula (1)
Li_{α}M_{β}X_{γ} ... Formula (1),
where α, β, and γ are each a value greater than 0.

4. The electrode according to any one of claims 1 to 3, wherein
the M includes yttrium.

5. The electrode according to any one of claims 1 to 4, wherein
the electrode current collector layer includes aluminum as a main component.

6. The electrode according to claim 5, wherein
the electrode current collector layer further includes an element other than aluminum.

7. The electrode according to any one of claims 1 to 6, wherein
the electrode current collector layer includes an aluminum alloy.

8. The electrode according to any one of claims 1 to 7, wherein
the active material is a positive electrode active material.

9. The electrode according to any one of claims 1 to 7, wherein
the active material is a negative electrode active material.

10. A battery comprising:
a positive electrode;
a negative electrode; and
an electrolyte layer disposed between the positive electrode and the negative electrode, wherein
at least one selected from the group consisting of the positive electrode and the negative electrode is the electrode according to one of claims 1 to 7.
